# EUROPEAN PATENT SPECIFICATION

(11) **EP 1 252 348 B1**
(45) Date of publication and mention of the grant of the patent: **24.11.2004**
(21) Application number: 00991520.8
(22) Date of filing: 22.12.2000
(51) Int. Cl.: C22B 23/02

(54) **IRON-NICKEL ALLOY PRODUCTION**
HERSTELLUNG EINER EISEN-NICKEL-LEGIERUNG
PRODUCTION D'ALLIAGE DE FER-NICKEL

(30) Priority: 22.12.1999 ZA 9904564
(43) Date of publication of application: 30.10.2002
(73) Proprietor: MINTEK, Randburg, 2194 (ZA)
(72) Inventor: CURR, Thomas, Robert, 2198 Johannesburg (ZA); BARCZA, Nicholas, Adrian, 2194 Randburg (ZA); LAGENDIJK, Herman, 2195 Johannesburg (ZA)
(74) Representative: Paget, Hugh Charles Edward
(86) International application number: PCT/ZA2000/000260
(87) International publication number: WO 2001/046482

(56) References cited:
- EP-A- 0 643 147
- WO-A-91/05879
- WO-A-97/20954
- US-A- 3 854 936
- US-A- 5 749 939

## Description

### BACKGROUND OF THE INVENTION

This invention relates to the production of an iron-nickel alloy and more particularly is concerned with the production of such an alloy for use in a stainless steel plant.

South African patent No. 94/6071 describes a process for the production of ferro-nickel from nickel containing laterite. In the process feed material either in the form of pre-reduced nickel containing laterite or in the form of nickel containing laterite is fed simultaneously with a carbonaceous reductant to a DC arc furnace. If the laterite is pre-reduced then this may be achieved by drying the laterite ore, milling and then calcining followed by a pre-reduction step preferably in a fluidised bed reactor. The material, which preferably is pre-heated, is then fed to the DC arc furnace and a nickel depleted slag and ferro-nickel are withdrawn from the furnace.

Nickel is the major cost item in stainless steel representing approximately 60% of material cost. On the other hand the iron content is the major component by mass making up in excess of 70% of the material mass. Scrap stainless steel is a low cost source of material for stainless steel production, but in some instances only small quantities of scrap stainless steel are available.

### SUMMARY OF INVENTION

The invention provides a method of producing an iron-nickel alloy which includes the step of reducing, in a DC arc furnace, the iron oxide content of a slag which is produced from a laterite ore feed material and which is characterised in that a sufficient amount of carbonaceous material is used to reduce the iron oxide content in the slag to less than 10% and to produce an iron-nickel alloy with a nickel content of from 10% to 15%.

The reduction may take place in the DC arc furnace with sufficient carbonaceous reducing agent to reduce the iron oxide content in the slag to less than 2.5%. The iron oxide content may be selected to achieve a silicon content in the alloy of less than 2%.

The addition of fluxes to the slag should be minimised and, under certain conditions, may be eliminated.

According to a preferred aspect of the invention the iron-nickel alloy is fed directly in liquid form into a plant for the production of stainless steel.

The silicon content in the alloy should be minimised to reduce energy consumption in the furnace and to limit subsequent refining of the alloy to remove the silicon. To achieve this objective the invention provides for the operating temperature in the furnace, the FeO content of the slag, and the addition of flux to the furnace, to be adjusted to lower the silicon content of the alloy. Some silicon is acceptable as it would be used for reduction in the downstream process, but only if no dephosphorization step is required - if not the silicon must be removed first.

Normally it is not commercially attractive to further reduce the iron oxide in the slag below a level required to produce an alloy with a nickel content lower than 25%, with a desired content being as low as 10% to 15%, since no credit is given for the iron in commercial grades of ferro-nickel. However there is significant value in this process if the additional iron units are fed, as indicated, in molten form directly to a stainless steel plant.

It is however possible to cast or granulate the iron-nickel alloy for sale or to stock-pile it for use as a coolant or in order to meet capacity requirements during downtime.

The aforementioned reduction step may be preceded by the steps of:
a) drying the laterite ore,
b) crushing the ore to an acceptable particle size for fluidised bed calcining,
c) calcining the crushed ore,
d) pre-reducing the calcined ore, and
e) melting the ore to produce an iron-nickel alloy and a slag.

In the pre-reduction step d) substantially all of the ferric iron oxide may be reduced to ferrous oxide.
Alternatively the iron and nickel may be metallised under more strongly reducing conditions. This latter step reduces the electrical energy consumption in the smelting stage in the DC arc furnace.

A further option provides for hot material after step c) to be fed to the DC arc furnace.

### BRIEF DESCRIPTION OF THE DRAWINGS

The invention is further described by way of example with reference to the accompanying drawings in which:
Figure 1 is a flow sheet representation of a method of producing an iron-nickel alloy according to the invention;
Figure 2 illustrates diagrammatically aspects of a conventional process for the production of ferro-nickel;
Figure 3 is similar to Figure 2, but relates to the process of the invention; and
Figure 4 illustrates a relationship between silicon content in the iron-nickel alloy and FeO content in the slag.

### DESCRIPTION OF PREFERRED EMBODIMENT

As indicated in the preamble of this specification it is known that nickel is the major cost item in stainless steel, representing approximately 60% of the material cost. On the other hand iron units are the major component by mass. Further, scrap stainless steel is the lowest cost source of material but the supply thereof is limited.

South African patent No. 94/6071 describes a method for the production of commercial grades of ferro-nickel which is based on producing a nickel- depleted slag. The patent specification does not refer to the reduction of most of the iron-oxide in the slag to produce a lower grade nickel-containing iron alloy.

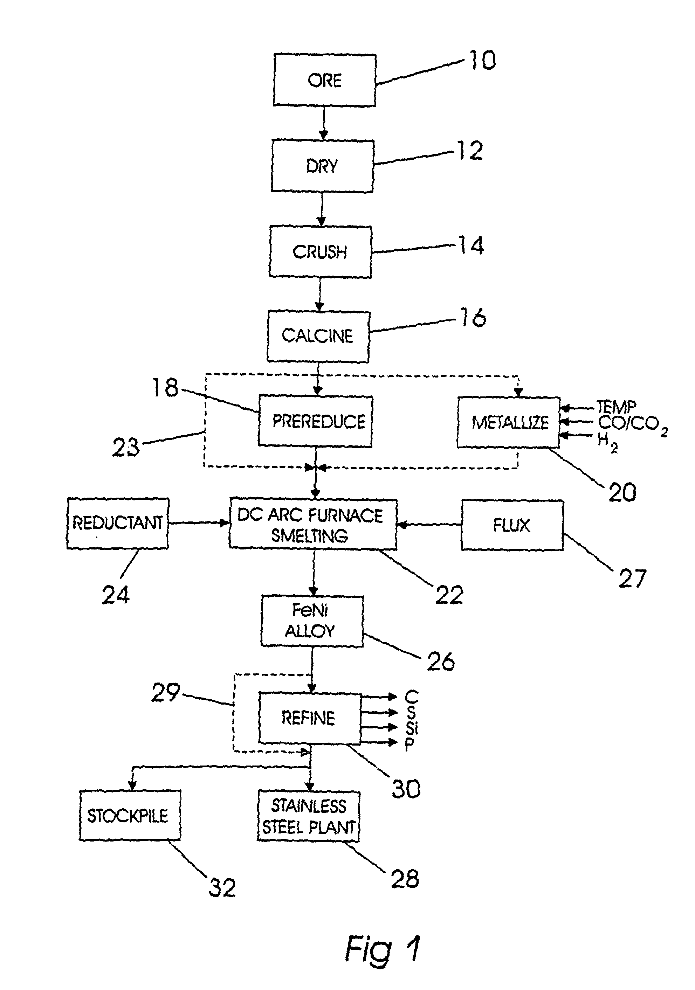

Figure 1 illustrates a process flow-sheet for the production of an iron-nickel alloy which is transferred in molten form directly to a stainless steel plant.

Referring to Figure 1 a laterite ore 10 is dried in a step 12 so that it can be crushed (step 14) to an acceptable particle size for calcining in a fluidised bed calciner 16 at a temperature which lies in a range of from 700°C to 900°C. Typically calcining takes place at a temperature in the range of 850°C to 900°C.

The calcined laterite is then pre-reduced in a fluidised reduction reactor (step 18) to reduce all the iron oxide as Fe³⁺ to iron oxide as Fe²⁻. Alternatively, as is indicated by an alternative flow path in dotted lines, the iron is metallised under more strongly reducing conditions (step 20) at an appropriate temperature and by controlling atmospheric conditions. The reducing agent (18, 20) may be reformed natural gas, syngas or a solid carbonaceous material. This approach is taken to reduce electrical energy consumption in a subsequent smelting stage 22. A further option, indicated by a dotted line 23, is to pre-heat only so that the feed is at a temperature of about 900°C.

The calcined and pre-reduced feed material from the step 18, or the highly metallised feed material from the step 20, or the preheated material (step 23), as the case may be, which, as noted, should be hot charged to about 900°C, is then fed to a DC arc furnace (step 22) with sufficient carbonaceous reducing agent 24 to reduce the iron-oxide in the slag to less than 10%, preferably less than 5%, and more preferably less than 2%, to produce an iron-nickel alloy 26 with a nickel content of from 10% to 15%.

Flux 27 (eg. CaO and Al₂O₃) may be added, depending on the operating temperature of the furnace, to reduce the silicon content of the alloy. However, the furnace operation is also optimised to reduce the addition of fluxes. The silicon content in the alloy 26 should be kept as low as possible to minimise energy consumption in the furnace and to limit subsequent refining of the alloy to remove the silicon. As is apparent from test results presented hereinafter, the silicon content, at least to some extent, can be manipulated to an acceptable low level through a choice of furnace operating temperature, and the judicious addition of fluxes.

A substantial economic benefit is achieved if the alloy is fed in liquid form (step 29) directly to an adjacent stainless steel plant 28. The alloy may however be refined, in a preceding step 30, to adjust the carbon, sulphur, silicon and phosphorus contents to appropriate levels. Generally the refining step 30 may only be omitted if the phosphorous content of the alloy is acceptable to the stainless steel plant.

Although the principal benefit of the invention lies in transferring the material directly to the stainless steel plant the material could alternatively be cast or granulated for sale or stock-piled for use as a coolant or for meeting capacity requirements during down-time, as is indicated by a block 32.

The smelting process (step 22) is run to extract the optimum amount of liquid iron units. The credit for the iron units is based on the additional iron produced since the iron in the standard grade of ferro-nickel does not normally attract any credit but helps to market the product. Thus the additional iron units for stainless steel production are available at a marginal incremental cost which is far lower than for bought-in iron units. The iron units are liquid and this avoids the energy cost and furnace capacity requirement to melt out-sourced iron units. The iron units are relatively clean after the refining step 30. The recovery of the iron units also helps to make the overall production of the nickel units more cost effective and justifies the shipment of laterite ore to the site of the stainless steel plant.

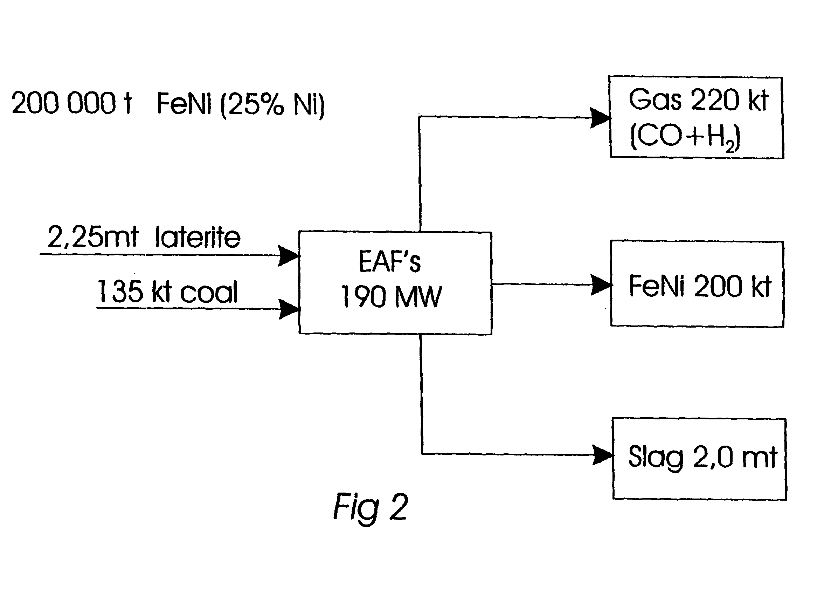

Figure 2 illustrates diagrammatically parameters of raw materials and output products in the production of 200 kt per annum of ferro-nickel containing 25% nickel, in a conventional process. Use is made of calcined laterite with a nickel-oxide content of 2,8% and an iron-oxide content of 23%.

The energy consumption of the electric arc furnace is 190 Megawatts and the reductant consumption is 135 kt coal.

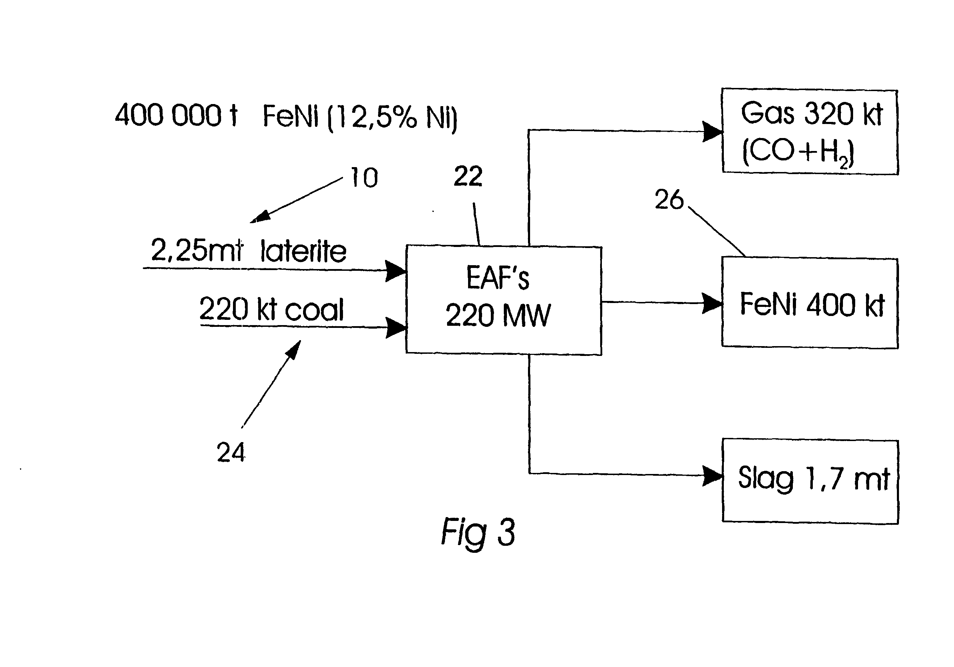

Figure 3 illustrates parameters of raw materials and output products in the production of 400 kt per annum of ferro-nickel with a nickel content of 12,5%, using the process of the invention. The total electrical consumption of the arc furnaces is increased slightly to 220 Megawatts and the carbonaceous reductant consumption is substantially increased and is of the order of 220 kt coal.

The only additional costs for implementing the approach of the invention are the costs required for refining the alloy (step 30), for off-gas treatment, for refractory wear, additional manpower and maintenance.

The following tables contain a comparison between the calculated metallurgical results for an existing process to which Figure 2 relates and for the process of the invention to which Figure 3 relates.

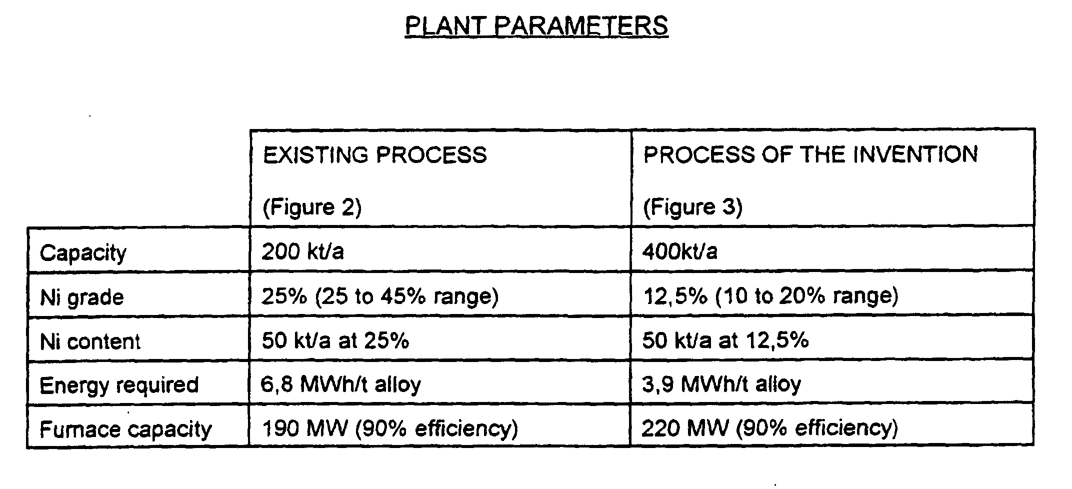

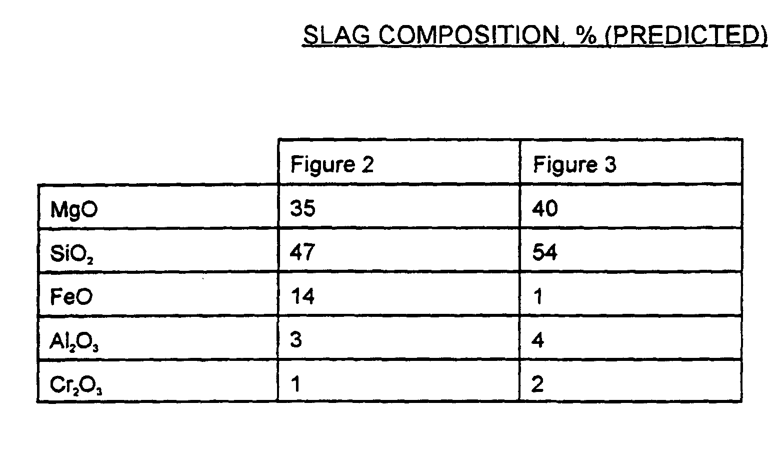

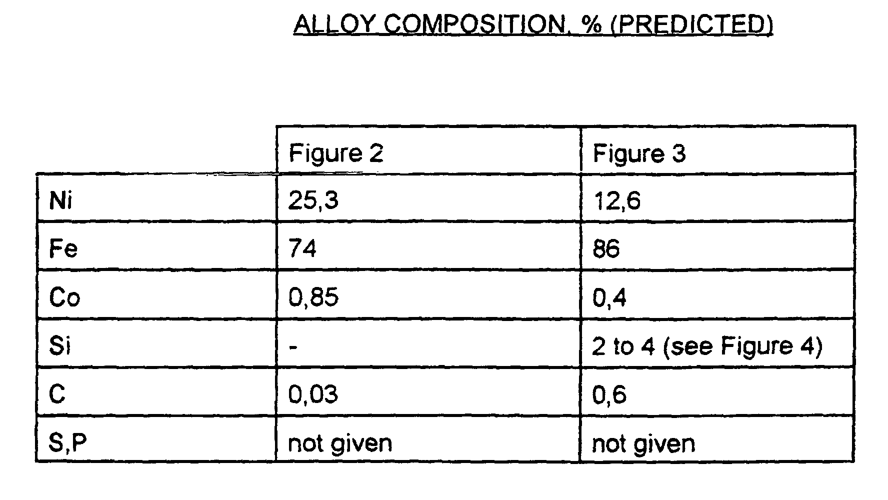

It is apparent that by carrying out the process of the invention adjacent a stainless steel plant significant economic benefits result through the step of extracting additional iron units using a DC arc furnace with its inherent advantages. These advantages include an open bath and better metallurgical control which allows the reduction of the additional iron-oxide in a highly effective manner.

It is necessary to control the DC furnace, including the feeding of the exact amount of reductant to the furnace, to avoid unnecessary side-reactions such as SiO₂ or MgO reduction. A conventional three phase three electrode furnace of the immersed electrode or shielded arc type would not be easy to control with the use of extra reductant as this would cause too much inter-electrode conduction above the bath, particularly since the slag volume and resistance are high. As the process of the invention, compared to the conventional approach, requires about 15% more energy which is consumed in the electric arc furnace, it is preferable to carry out the process in a furnace with a higher megawatt capacity. Another possibility is to transfer the FeO-containing slag to a second low power but large furnace from which the balance of the iron units would be produced. The first furnace would produce a standard ferro-nickel alloy (25% to 45% nickel) and the second furnace would produce an iron alloy which is very low in nickel. In this case both alloys would be refined separately prior to feeding to the stainless steel plant. However this would be a less preferred approach because of the cost of two furnaces. Greater flexibility is however possible by making use of two furnaces and this variation is intended to fall within the scope of the present invention.

A number of small scale experiments were conducted to test the principles of the invention and to obtain data on the reduction of iron and nickel during the smelting of nickel-bearing laterite.

### Experimental Approach and Results

The bulk chemical composition for the Ni-bearing laterite used for this investigation is shown in Table 1.

Flux additions of analytical grade chemicals were made to the laterite. CaO was added in some experiments to ensure a low liquidus, while Al₂O₃ was added to protect the alumina (Al₂O₃) crucible used for most of the tests. Graphite was added to the charges as reducing agent. The experimental conditions, together with flux and reductant additions, are shown in Table 2.

Smelting of Tests 1 to 9 was conducted at 1550°C using alumina (Al₂O₃) crucibles in an inert argon atmosphere. Light blue slags and metal alloys were collected. The slags were milled and submitted for chemical analysis. The results of the quantitative chemical slag analyses are shown in Table 3.

Test 10 was conducted in a magnesia (MgO) crucible without the addition of flux at a temperature of 1600°C. An alloy and a light coloured slag that appeared molten were obtained.

The alloys produced were extremely hard and could not milled for chemical analysis. Instead, polish sections of alloy from selected tests were prepared and these were examined using a Scanning Electron Microscope (SEM). Microanalysis of the alloys was performed using Energy Dispersive Spectrometry (EDS) coupled to the SEM. The results are shown in Table 4.

### Conclusion

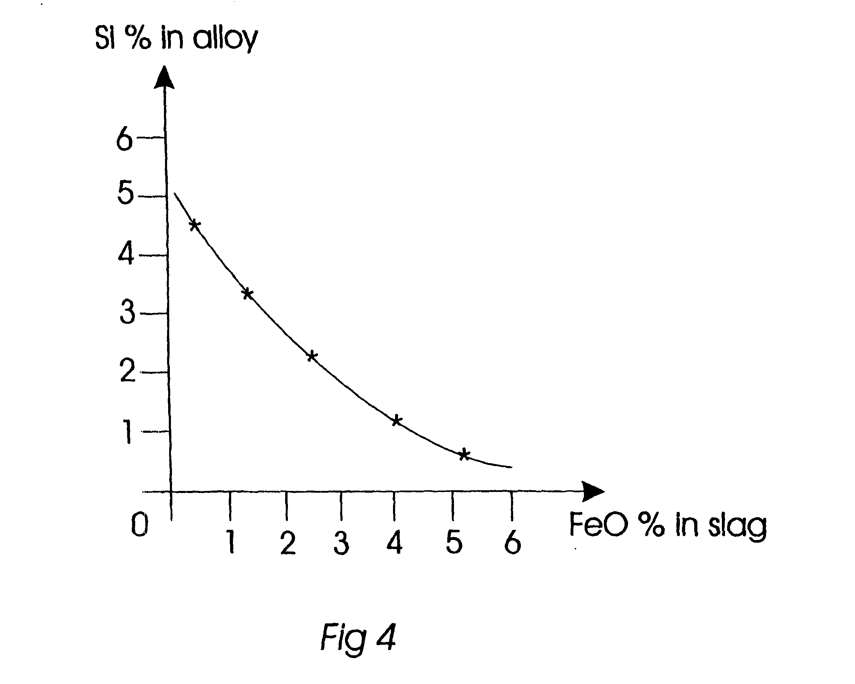

The experimental results demonstrated that it will be possible to manipulate the Si content of the alloy through the level of reduction of FeO in the slag via the reductant addition, the choice of operating temperatures and the use and choice of fluxes. Figure 4 illustrates in graphical form the relationship between the silicon content in the alloy and the FeO content in the slag obtained when working at an operating temperature of about 1600°C. To achieve a silicon content of less than 1% the FeO content in the slag should not be lower than 4% to 5%, as is shown in Figure 4.

The smelting operation differs from conventional FeNi smelting in that the slag is depleted in FeO which increases the slag liquidus and viscosity at the usual smelting temperatures. This greatly increases the likelihood of foaming slag formation that destablized the furnace operation. Conventional AC furnaces are operated in two principal methods (as taught in the literature): either an immersed electrode whereby power is generated via slag resistance heating or a shielded-arc arrangement whereby the arc struck between the electrode and the molten slag bath is surrounded by a burden of solid feed materials to "shield" the arc. The slag resistance method is not able to reach the high smelting intensity of the shielded-arc method (typically 200kWm⁻² versus 450kWm⁻²). This is due to the high side-wall heat fluxes encountered in the slag resistance method when attempting to increase the smelting intensity much above the 200kW/m² of hearth area level.

The shielded-arc method is therefore clearly advantageous in terms of furnace capital cost; however the shielding burden needs to be sufficiently porous to avoid eruptions from gas evolved during the smelting step and should not be electrically conductive to avoid electrical short-circuits between the electrodes through the burden material.

The high degree of reduction required in the claimed new process implies either well metallized feed material or significant additions of carbonaceous reductant. In either case the shielded-arc method is not suitable for this process.

In addition the consequences of slag foaming are very severe in the case of a shielded-arc method in terms of burden eruptions.

Therefore the use of a DC open arc method (e.g. as disclosed in SA Patent No. 94/6071) is required to execute this process advantageously.

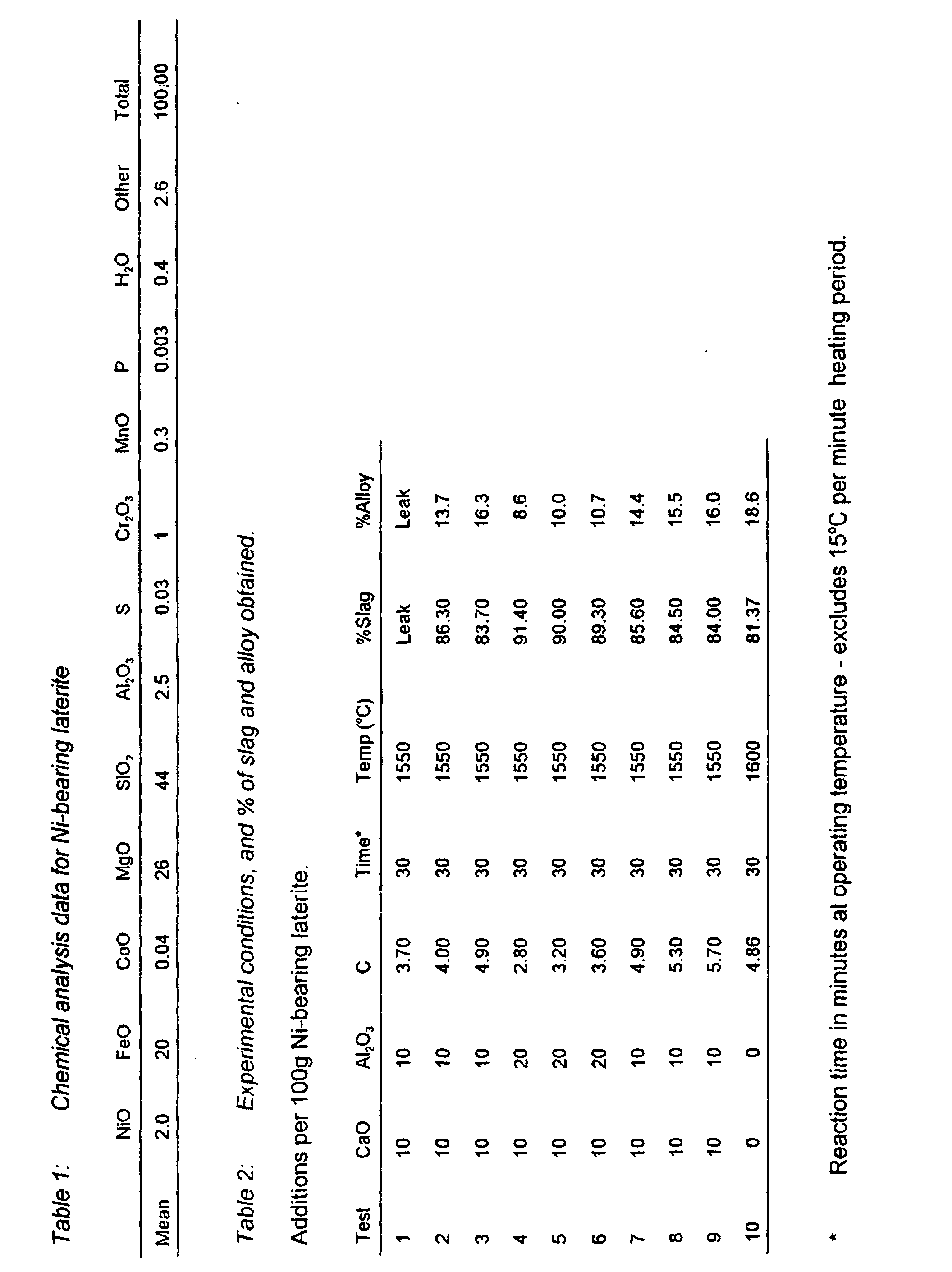

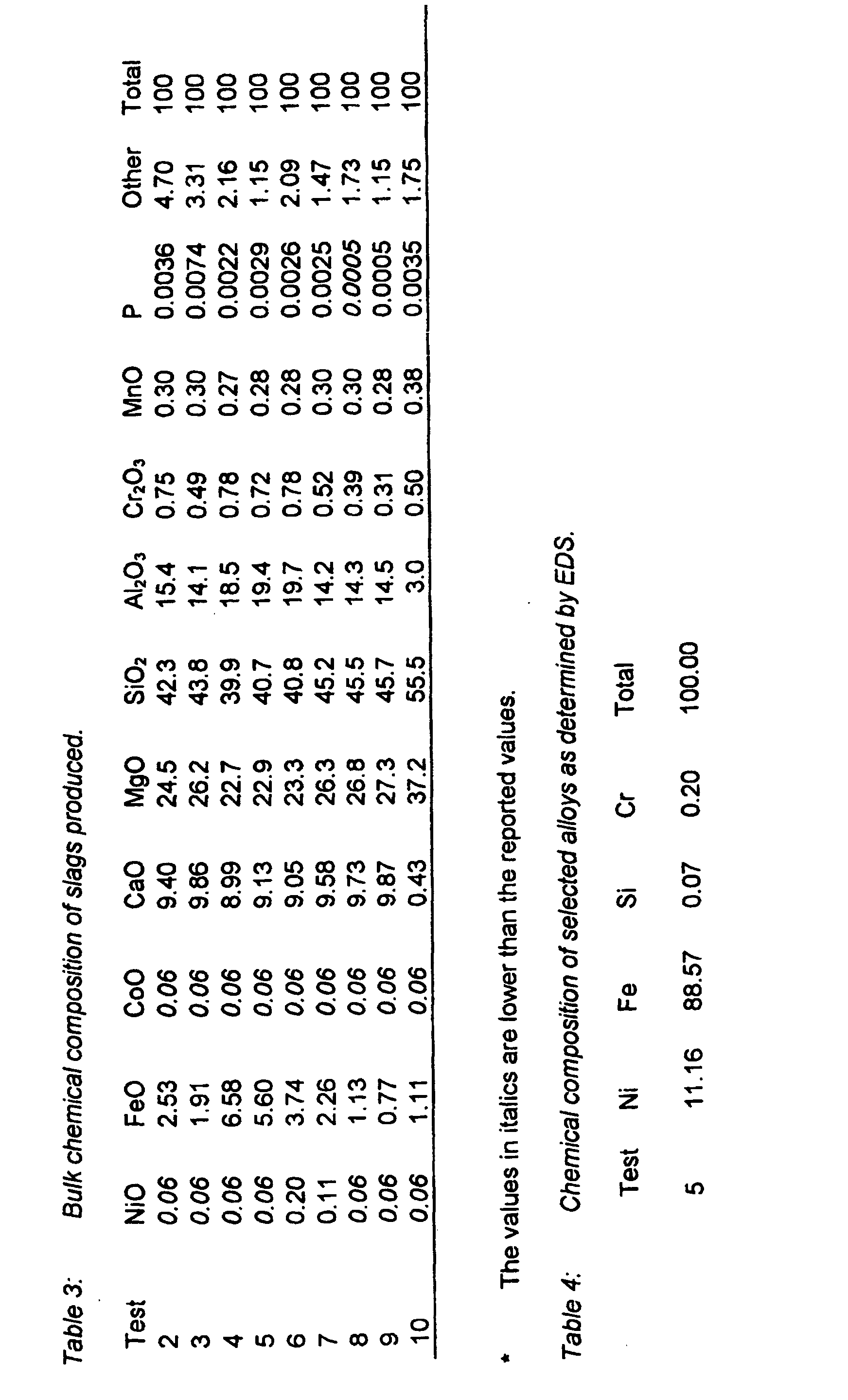

## Claims

1. A method of producing an iron-nickel alloy which includes the step of reducing, in a DC arc furnace, the iron oxide content of a slag which is produced from a laterite ore feed material and wherein a sufficient amount of carbonaceous material is used to reduce the iron oxide content in the slag to less than 10% and to produce an iron-nickel alloy with a nickel content of from 10% to 15%.

2. A method according to claim 1 **characterised in that** the reduction takes place in the DC arc furnace with sufficient carbonaceous reducing agent to reduce the iron oxide content in the slag to less than 2.5%.

3. A method according to claim 2 **characterised in that** the iron oxide content in the slag is selected to achieve a silicon content in the alloy of less than 2%.

4. A method according to claim 2 or 3 which is **characterised in that** it includes the step of controlling the operating temperature of the furnace to limit the silicon content of the alloy.

5. A method according to claim 2, 3 or 4 which is **characterised in that** it includes the step of controlling the addition of flux or fluxes to the furnace to achieve an optimum operating temperature and to limit the silicon content of the alloy.

6. A method according to any one of claims 1 to 5 **characterised in that** the reduction step is preceded by the steps of:
a) drying the laterite ore,
b) crushing the ore to an acceptable particle size for fluidised bed calcining,
c) calcining the crushed ore,
d) pre-reducing the calcined ore, and
e) melting the ore to produce an iron-nickel alloy and a slag.

7. A method according to claim 6 **characterised in that** in the pre-reduction step d), substantially all of the ferric iron oxide is reduced to ferrous oxide.

8. A method of producing stainless steel which is **characterised in that** it includes the step of providing additional iron to a stainless steel plant by feeding the iron-nickel alloy, produced by the method of any one of claims 1 to 5, directly in liquid form to the stainless steel plant.

9. A method or producing stainless steel which is **characterised in that** the alloy which is produced by the method of any one of claims 1 to 7 is fed to a stainless steel plant.

10. A method according to claim 9 **characterised in that** the alloy is fed in molten form directly to the stainless steel plant.

11. A method according to claim 10 **characterised in that** the DC arc furnace is operated to produce an optimum amount of liquid iron units required for stainless steel production in the stainless steel plant.

12. A method according to claim 9,10 or 11 **characterised in that** the alloy is refined, before being fed to the stainless steel plant, to adjust the level of at least one of the following: the carbon, sulphur, silicon and phosphorus contents in the alloy.

## Patentansprüche

1. Verfahren zur Herstellung einer Eisen-Nickel-Legierung, umfassend den Schritt des Reduzierens, in einem Gleichstromlichtbogenofen, des Eisenoxidgehalts einer Schlacke, die aus einem Lateriterz-Feedmaterial hergestellt ist, und worin eine ausreichende Menge kohlenstoffhältiges Material verwendet wird, um den Eisenoxidgehalt in der Schlacke auf weniger als 10 % zu reduzieren und eine Eisen-Nickel-Legierung mit einem Nickelgehalt von 10 % bis 15 % herzustellen.

2. Verfahren nach Anspruch 1, **dadurch gekennzeichnet, dass** die Reduktion in einem Gleichstromlichtbogenofen mit einer ausreichenden Menge kohlenstoffhältigem Reduktionsmittel stattfindet, um den Eisenoxidgehalt in der Schlacke auf weniger als 2,5 % zu reduzieren.

3. Verfahren nach Anspruch 2, **dadurch gekennzeichnet, dass** der Eisenoxidgehalt in der Schlacke so gewählt ist, dass die Legierung einen Siliciumgehalt von weniger als 2 % aufweist.

4. Verfahren nach Anspruch 2 oder 3, **dadurch gekennzeichnet, dass** es den Schritt des Regelns der Betriebstemperatur des Ofens umfasst, um den Siliciumgehalt der Legierung zu begrenzen.

5. Verfahren nach Anspruch 2, 3 oder 4, **dadurch gekennzeichnet, dass** es den Schritt des Regelns des Zusatzes von Zuschlag oder Zuschlägen zum Ofen umfasst, um eine optimale Betriebstemperatur zu erreichen und den Siliciumgehalt der Legierung zu begrenzen.

6. Verfahren nach einem der Ansprüche 1 bis 5, **dadurch gekennzeichnet, dass** vor dem Reduktionsschritt folgende Schritt durchgeführt werden:
a) Trocknen des Lateriterzes,
b) Zerkleinern des Erzes auf eine annehmbare Teilchengröße zum Fließbett-Calcinieren,
c) Calcinieren des zerkleinerten Erzes,
d) Vorreduzieren des calcinierten Erzes und
e) Schmelzen des Erzes, um eine Eisen-Nickel-Legierung und eine Schlacke herzustellen.

7. Verfahren nach Anspruch 6, **dadurch gekennzeichnet, dass** im Vorreduktionsschritt d) im Wesentlichen das gesamte Eisen(III)-oxid zu Eisen(II)-oxid reduziert wird.

8. Verfahren zur Herstellung von Edelstahl, **dadurch gekennzeichnet, dass** es den Schritt des Bereitstellens von zusätzlichem Eisen in einer Edelstahlfabrik umfasst, indem die Eisen-Nickel-Legierung, die durch ein Verfahren nach einem der Ansprüche 1 bis 5 hergestellt wurde, direkt in flüssiger Form zur Edelstahlfabrik zugeführt wird.

9. Verfahren zur Herstellung von Edelstahl, **dadurch gekennzeichnet, dass** die Legierung, die durch ein Verfahren nach einem der Ansprüche 1 bis 7 hergestellt wurde, zu einer Edelstahlfabrik zugeführt wird.

10. Verfahren nach Anspruch 9, **dadurch gekennzeichnet, dass** die Legierung in geschmolzener Form direkt zur Edelstahlfabrik zugeführt wird.

11. Verfahren nach Anspruch 10, **dadurch gekennzeichnet, dass** der Gleichstromlichtbogenofen betrieben wird, um eine optimale Menge flüssiger Eiseneinheiten herzustellen, die zur Edelstahlherstellung in der Edelstahlfabrik erforderlich ist.

12. Verfahren nach Anspruch 9, 10 oder 11, **dadurch gekennzeichnet, dass** die Legierung veredelt wird, bevor sie zur Edelstahlfabrik zugeführt wird, um den Gehalt zumindest eines der Folgenden in der Legierung einzustellen: Kohlenstoff, Schwefel, Silicium und Phosphor.

## Revendications

1. Un procédé de production d'un alliage fer-nickel qui comprend les étapes consistant à réduire, dans un four à arc à courant continu, la teneur en oxyde de fer de scories produites à partir d'une matière d'amenée à minerais de latérite et dans lequel une quantité suffisante de matière carbonée est utilisée pour réduire la teneur en oxyde de fer des scories à moins de 10% et pour former un alliage fer -nickel avec une teneur en nickel de 10% à 15%.

2. Un procédé selon la revendication 1 **caractérisé en ce que** la réduction se produit dans le four à arc à courant continu avec suffisamment d'agent de réduction carboné pour réduire la teneur en oxyde de fer des scories à moins de 2,5%.

3. Un procédé selon la revendication 2 **caractérisé en ce que** la teneur en oxyde de fer des scories est choisie pour obtenir une teneur en silicium de l'alliage de moins de 2%.

4. Un procédé selon la revendication 2 ou 3 qui est **caractérisé en ce qu'**il comprend l'étape consistant à réguler la température de fonctionnement du four pour limiter la teneur en silicium de l'alliage.

5. Un procédé selon la revendication 2, 3 ou 4 qui est **caractérisé en ce qu'**il comprend l'étape consistant à réguler l'addition d'un ou de plusieurs flux dans le four afin d'obtenir une temp érature de fonctionnement optimale et de limiter la teneur en silicium de l'alliage.

6. Un procédé selon l'une quelconque des revendications 1 à 5 **caractérisé en ce que** l'étape de réduction est précédée par les étapes consistant à:
a) sécher le minerai de latérite
b) broyer le minerai à une granulométrie acceptable pour calcination à lit fluidisé
c) calciner le minerai broyé
d) effectuer une pré-réduction du minerai calciné, et
e) fondre le minerai pour produire un alliage fer-nickel et des scories.

7. Un procédé selon la revendication 6 **caractérisé en ce que**, dans l'étape d) de pré-réduction, pratiquement tout l'oxyde de fer ferrique est réduit en oxyde ferreux.

8. Un procédé de production d'acier inoxydable qui est **caractérisé en ce qu'**il comprend l'étape consistant à fournir du fer supplémentaire à une installation d'acier inoxydable en amenant l'alliage fer -nickel produit par le procédé de l'une quelconque des revendications 1 à 5, directement sous forme liquide dans l'installation d'acier inoxydable.

9. Un procédé de production d'acier inoxydable qui est **caractérisé en ce que** l'alliage qui est produit par le procédé de l'une quelconque des revendications 1 à 7 est amené à une installation d'acier inoxydable.

10. Un procédé selon la revendication 9 **caractérisé en ce que** l'alliage est amené sous forme fondue directement à l'installation d'acier inoxydable.

11. Un procédé selon la revendication 10 **caractérisé en ce que** le four à arc à courant continu est amené à fonctionner pour produire une quantité optimale d'unités de fer liquide nécessaire pour la production d'acier inoxydable dans l'installation d'acier inoxydable.

12. Un procédé selon la revendication 9, 10 ou 11 **caractérisé en ce que** l'alliage est raffiné, avant d'être amené à l'installation d'acier inoxydable, pour régler le niveau d'au moins une parmi ce qui suit: les teneurs en carbone, en soufre, en silicium et en phosphore dans l'alliage.
